# EUROPEAN PATENT APPLICATION

(11) **EP 4 495 651 A1**
(43) Date of publication of application: **22.01.2025**
(21) Application number: 22932230.0
(22) Date of filing: 18.03.2022
(51) Int. Cl.: G02B 6/44

(54) **OPTICAL FIBER CABLE**

(71) Applicant: SUMITOMO ELECTRIC INDUSTRIES, LTD., Osaka-shi, Osaka 541-0041 (JP)
(72) Inventor: SATO Fumiaki, Osaka-shi, Osaka 541-0041 (JP); KIMURA Toyoaki, Osaka-shi, Osaka 541-0041 (JP); SUZUKI Yohei, Osaka-shi, Osaka 541-0041 (JP); YOKOCHI Takayuki, Osaka-shi, Osaka 541-0041 (JP)
(74) Representative: Müller-Boré & Partner Patentanwälte PartG mbB
(86) International application number: PCT/JP2022/012824
(87) International publication number: WO 2023/175961

(57) **Abstract**

An optical fiber cable includes: a cable core including a plurality of optical fibers or a plurality of optical fiber ribbons; a cable sheath disposed outside the cable core; a plurality of subunits, each of the plurality of subunits being disposed in the cable core and including a covering material covering the plurality of optical fibers or the plurality of optical fiber ribbons; and at least one tensile strength member embedded in the cable sheath. The cable sheath has a kinetic friction coefficient of 0.5 or less with respect to a metal plate, and the covering material has an oxygen index of 40 or more.

## Description

### TECHNICAL FIELD

The present disclosure relates to an optical fiber cable.

### BACKGROUND ART

Patent Literature 1 discloses an optical fiber cable including an optical fiber ribbon in a pipe, in which at least two optical fibers included in the ribbon are intermittently bonded along a length of the fibers.

### CITATION LIST

### PATENT LITERATURE

Patent Literature 1: JP2015-517679A

### SUMMARY OF INVENTION

An optical fiber cable according to an aspect of the present disclosure includes: a cable core including a plurality of optical fibers or a plurality of optical fiber ribbons; a cable sheath disposed outside the cable core; a plurality of subunits, each of the plurality of subunits being disposed in the cable core and including a covering material covering the plurality of optical fibers or the plurality of optical fiber ribbons; and at least one tensile strength member embedded in the cable sheath, in which: the cable sheath has a kinetic friction coefficient of 0.5 or less with respect to a metal plate; and the covering material has an oxygen index of 40 or more.

### BRIEF DESCRIPTION OF DRAWINGS

[FIG. 1] FIG. 1 is a diagram illustrating an optical fiber cable with a towing tool according to an aspect of the present embodiment.
[FIG. 2] FIG. 2 is a cross-sectional view taken along a line A-A in FIG. 1.
[FIG. 3] FIG. 3 is a plan view illustrating intermittent-coupled-type optical fiber ribbons in a longitudinal direction.
[FIG. 4] FIG. 4 is a diagram illustrating a measurement device for measuring a kinetic friction coefficient of the optical fiber cable according to the aspect of the present embodiment.
[FIG. 5] FIG. 5 is a diagram illustrating a pressure-feeding device for performing a pressure-feeding evaluation of the optical fiber cable.

### DESCRIPTION OF EMBODIMENTS

### [Technical Problem]

Recently, optical fiber cables laid in buildings are required to have strict flame retardance. Additionally, in recent years, along with an increase in amount of information to be transmitted, multicoaxial optical fiber cables including a plurality of optical fibers are required to have low friction, for example, in order to facilitate passage through ducts.

The present disclosure is to provide an optical fiber cable having good low frictional properties and flame retardance.

### [Advantageous Effects of Present Disclosure]

According to the present disclosure, it is possible to provide an optical fiber cable having good low frictional properties and flame retardance.

### [Description of Embodiments of Present Disclosure]

First, embodiments of the present disclosure are enumerated and described.
(1) An optical fiber cable according to an aspect of the present disclosure includes: a cable core including a plurality of optical fibers or a plurality of optical fiber ribbons; a cable sheath disposed outside the cable core; a plurality of subunits, each of the plurality of subunits being disposed in the cable core and including a covering material covering the plurality of optical fibers or the plurality of optical fiber ribbons; and at least one tensile strength member embedded in the cable sheath, in which: the cable sheath has a kinetic friction coefficient of 0.5 or less with respect to a metal plate; and wherein the covering material has an oxygen index of 40 or more.
   According to this configuration, the cable sheath has a kinetic friction coefficient of 0.5 or less with respect to the metal plate, so the optical fiber cable has good low frictional properties. Additionally, the covering material covering the plurality of optical fibers or the plurality of optical fiber ribbons has an oxygen index of 40 or more, so the optical fiber cable has good flame retardance. Consequently, the optical fiber cable according to the above configuration has good low frictional properties and flame retardance.
(2) In the optical fiber cable according to an aspect of the present disclosure, the kinetic friction coefficient of the cable sheath may be 0.3 or less, and the oxygen index of the covering material may be 40 or more.
   According to this configuration, the kinetic friction coefficient of the cable sheath is 0.3 or less, so the optical fiber cable has good insertion characteristics. Additionally, the oxygen index of the covering material is 40 or more, so the optical fiber cable has good flame retardance. Consequently, the optical fiber cable according to the above configuration has good insertion characteristics and flame retardance.
(3) In the optical fiber cable according to an aspect of the present disclosure, a plurality of the tensile strength members may be embedded at uniform intervals in a layer of the cable sheath.
   According to this configuration, since a plurality of tensile strength members are embedded at uniform intervals in the layer of the cable sheath, bending anisotropy (presence or absence of a direction in which bending is likely to occur) of the optical fiber cable is unlikely to occur. Note that "uniform" does not necessarily mean that the interval is strictly equal, but may mean that the tensile strength members are arranged substantially uniformly.
(4) In the optical fiber cable according to an aspect of the present disclosure, the cable sheath may include a halogen-free resin.
   According to this configuration, since the cable outer sheath includes the halogen-free resin, it can contribute to reducing an environmental load.
(5) The optical fiber cable according to an aspect of the present disclosure may further include a press-wrapping tape wound around an outer periphery of the cable core, and at least a part of the press-wrapping tape may be flame retardant.
   According to this configuration, since at least a part of the press-wrapping tape is flame retardant, the flame retardance of the optical fiber cable can be further improved.
(6) In the optical fiber cable according to an aspect of the present disclosure, a multicoaxial connector of 24 or more cores may be connected to end portions of the plurality of optical fibers or end portions of the plurality of optical fiber ribbons.

According to this configuration, a time required for connection to other optical fibers or the like can be shortened.

### [Details of Embodiments of Present Disclosure]

A specific example of an optical fiber cable according to an embodiment of the present disclosure will be described below with reference to the drawings. Note that the present disclosure is not limited to these examples, is defined by the claims, and is intended to encompass all changes made within the meaning and scope equivalent to the claims.

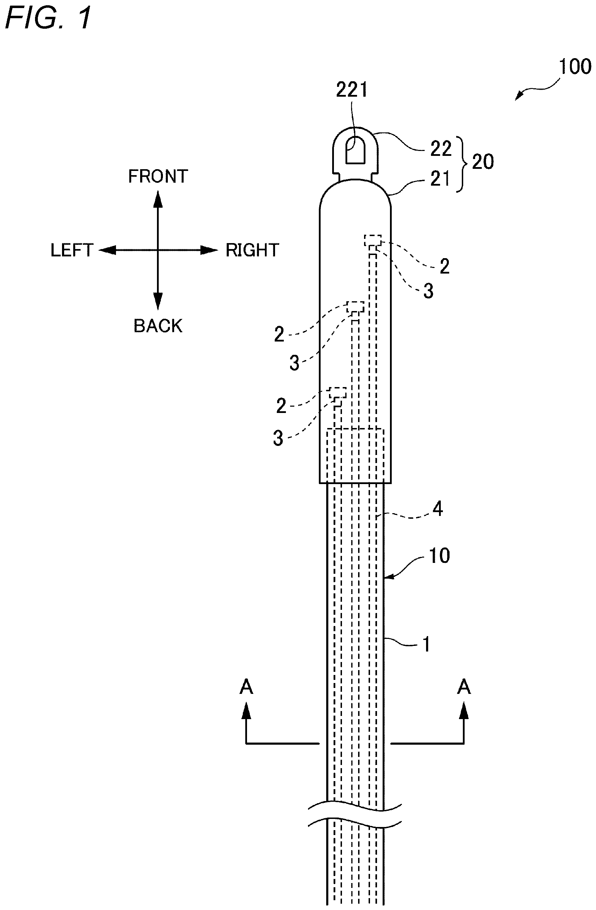

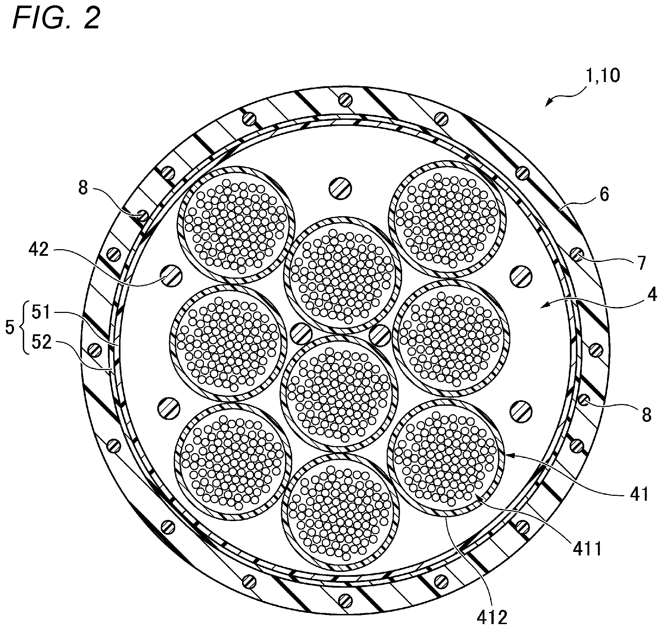

An optical fiber cable 100 with a towing tool according to the present embodiment will be described with reference to FIGS. 1 and 2. Note that, in the description of the present embodiment, for convenience of description, a "front-rear direction" and a "left-right direction" will be referred to as appropriate. These directions are relative directions set for the optical fiber cable 100 with a towing tool illustrated in FIG. 1. Here, the "front-rear direction" is a direction including a "front direction" and a "rear direction" in the drawings. The "left-right direction" is a direction including a "left direction" and a "right direction" in the drawings.

FIG. 1 is a diagram illustrating the optical fiber cable 100 with a towing tool. FIG. 2 is a cross-sectional view taken along a line A-A in FIG. 1. As illustrated in FIG. 1, the optical fiber cable 100 with a towing tool includes an optical fiber cable 10 and a towing tool 20. The optical fiber cable 10 includes a cable body 1, a plurality of multicoaxial connectors 2, and pitch converters 3. The towing port 20 includes a protective tube 21 and a pulling eye 22.

An outer diameter of the optical fiber cable 10 is, for example, 8 mm or greater and 20 mm or less. Note that the outer diameter of the optical fiber cable 10 according to the present embodiment is about 20 mm. As illustrated in FIG. 2, the optical fiber cable 10 includes a cable core 4, a press-wrapping tape 5, a cable sheath 6, tensile strength members 7, and tearing strings (fibrous fillers) 8. Note that the cable core 4, the press-wrapping tape 5, the cable sheath 6, the tensile strength members 7, and the tearing strings 8 are provided in cable body 1.

The cable core 4 includes a plurality of subunits 41 and a water absorbent 42. Note that, in the present embodiment, the cable core 4 includes nine subunits 41, but the number of subunits 41 included in the cable core 4 is not limited thereto. Additionally, although 96-core optical fibers are accommodated in each subunit 41, the number of optical fibers is not also limited thereto. In the present embodiment, 864-core optical fibers are accommodated in the optical fiber cable 10. Each subunit 41 includes a plurality of optical fiber ribbons 411 and a covering material 412.

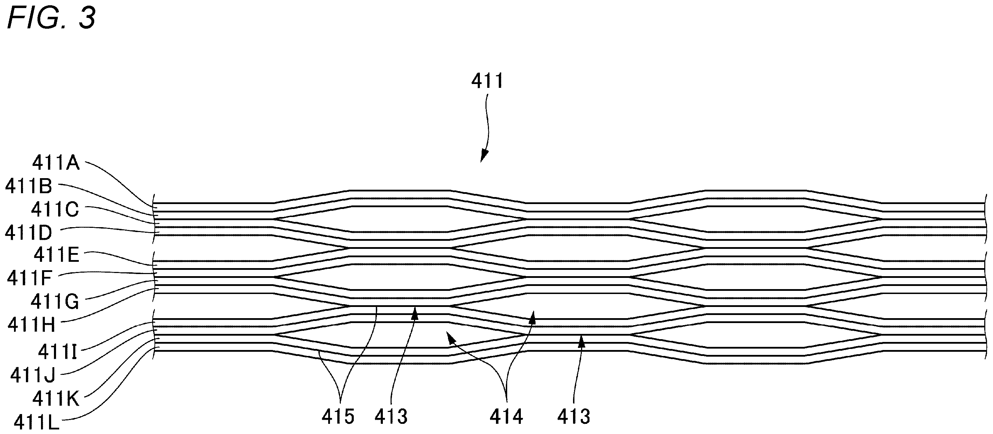

Here, the optical fiber ribbon 411 will be described in detail with reference to FIG. 3. As illustrated in FIG. 3, the optical fiber ribbon 411 is an intermittent-coupled-type optical fiber ribbon in which, in a state in which a plurality of optical fibers 411A to 411L are arranged in parallel in a direction orthogonal to a longitudinal direction, a coupling portion 413 where adjacent optical fibers are coupled and a non-coupling portion 414 where adjacent optical fibers are not coupled are intermittently provided in the longitudinal direction in a part or all between the plurality of optical fibers 411A to 411L. In the present embodiment, the optical fiber ribbon 411 includes twelve optical fibers (optical fibers 411A to 411L). Accordingly, eight optical fiber ribbons 411 are accommodated in each subunit 41. An outer diameter of each of the optical fibers 411A to 411L is, for example, 180 µm or 200 µm. Note that flame retardance may be applied to an ultraviolet curable resin with which glass of each of the optical fibers 411A to 411L is coated. Specifically, a flame retardant described below may be mixed into the ultraviolet curable resin.

The coupling portion 413 in the optical fiber ribbon 411 is formed, for example, by applying a coupling resin 415 made of an ultraviolet curable resin, a thermosetting resin, or the like between the optical fibers. When the coupling resin 415 is applied between the predetermined optical fibers, the coupling portion 413 and the non-coupling portion 414 are intermittently provided, and the respective optical fibers 411A to 411L are integrated in a parallel state. The coupling resin 415 may be applied only to one surface of parallel surfaces formed by the optical fibers 411A to 411L arranged in parallel, or may be applied to both surfaces. Further, the optical fiber ribbon 411 may be manufactured, for example, in such a way that a tape resin is applied to the one surface or both the surfaces of the optical fibers 411A to 411L arranged in parallel, all the optical fibers 411A to 411L are coupled to each other, and then a part of the optical fiber ribbon 411 is cleaved by a rotary blade or the like to form the non-coupling portion 414.

Returning back to FIG. 2, the covering material 412 will be described. The covering material 412 is disposed to cover the optical fiber ribbons 411. The covering material 412 has a substantially circular ring shape in a cross-sectional view of the cable. The covering material 412 is formed of a flame-retardant resin material in which, for example, a flame-retardant inorganic material such as magnesium hydroxide or aluminum hydroxide is added to a material such as vinyl chloride resin or polyolefin-based resin. Therefore, the covering material 412 has flame retardance. Note that in the present embodiment, the covering material 412 has an oxygen index of 40 or more.

The press-wrapping tape 5 is wound around an outer periphery of the cable core 4. A thickness of the press-wrapping tape 5 is, for example, 0.13 mm or greater and 0.15 mm or less. The press-wrapping tape 5 includes an inner layer 51 and an outer layer 52. That is, the press-wrapping tape 5 has a two-layered structure. However, the structure of the press-wrapping tape 5 is not limited to a two-layered structure. In the case of a two-layered structure, the inner layer 51 is formed of a water-absorbing tape. The water-absorbing tape is subjected to water absorption processing by, for example, attaching a water-absorbing powder to a base fabric made of polyester or the like.

The outer layer 52 is formed of a base material such as non-woven fabric, PET, or glass, for example. A flame retardant may be applied to the base material. From a viewpoint of reducing an environmental load, the flame retardant is preferably a halogen-free flame retardant such as a metal hydroxide, a nitrogen-based flame retardant, or a phosphorus-based flame retardant. However, the flame retardant may also be a halogen-based flame retardant such as a bromine-based flame retardant or a chlorine-based flame retardant. In this way, a part (the outer layer 52, in the present embodiment) of the press-wrapping tape 5 is flame retardant.

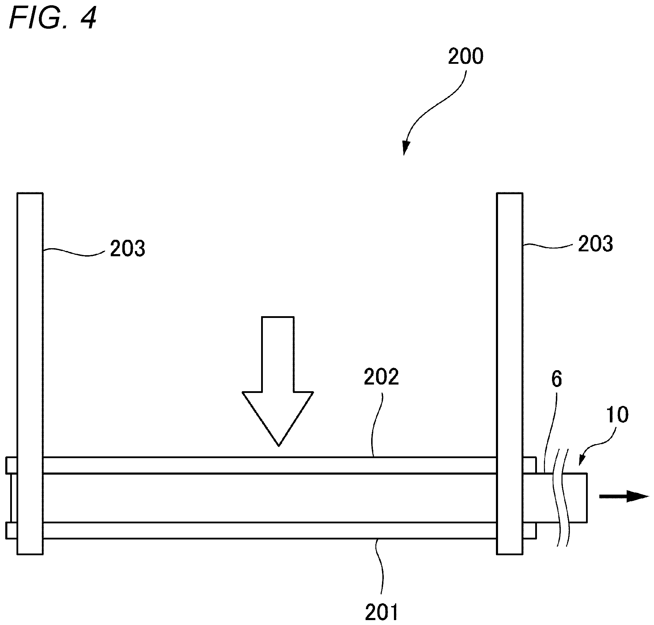

The cable sheath 6 is formed by extrusion molding a resin around the cable core 4 around which the press-wrapping tape 5 is wrapped. A thickness of the cable sheath 6 is, for example, 2.5 mm. The cable sheath 6 has a kinetic friction coefficient of, for example, 0.5 or less with respect to a metal plate (for example, a first metal plate 201 and a second metal plate 202 illustrated in FIG. 4).

The cable sheath 6 is formed of a vinyl chloride resin, a halogen-free resin, or the like. The halogen-free resin is, for example, cross-linked polyethylene, polypropylene, polybutylene terephthalate, urethane, nylon, or the like. Note that, when the cable sheath 6 is formed of a high-flame-retardant polyolefin (an example of the halogen-free resin), it is possible to improve the flame retardance of the cable sheath 6. The cable sheath 6 may contain, for example, a silicon-based release agent such as silicone or siloxane. In this case, the cable sheath 6 has low frictional properties. The kinetic friction coefficient of the cable sheath 6 with respect to the metal plate may be, for example, 0.3 or less. The plurality of tensile strength members 7 are embedded in the cable sheath 6 at uniform intervals, that is, at equal intervals. However, the interval between the tensile strength members 7 may be substantially uniform. Note that, in the present embodiment, 16 tensile strength members 7 are embedded in the cable sheath 6.

A diameter of the tensile strength member 7 is, for example, 0.5 mm. The tensile strength member 7 is formed of, for example, a fiber-reinforced plastic (FRP) such as aramid FRP, glass FRP, or carbon FRP. However, the tensile strength member 7 may also be formed of liquid crystal polymer. The tensile strength member 7 is preferably non-inductive. Note that the fiber-reinforced plastic (FRP) is generally a flammable material. From a standpoint of improving flame retardance of the entire optical fiber cable 10, the tensile strength member 7 is preferably disposed not in the vicinity of a surface layer of the cable sheath 6 but at a position close to a center of the optical fiber cable 10 in the cable sheath 6.

The tearing string 8 is provided to tear the cable sheath 6. The tearing string 8 is linearly arranged in the layer of the cable sheath 6 along the plurality of twisted optical fiber ribbons 411 in the longitudinal direction of the optical fiber cable 10. In the present embodiment, two tearing strings 8 are provided. The two tearing strings 8 are provided so as to face each other in a cross-sectional view of the cable. An operator can tear the cable sheath 6 in the longitudinal direction and take out the subunits 41 by pulling out the tearing string 8. The tearing string 8 is fibrous, and is formed of, for example, a plastic material (for example, polyester) resistant to tension.

Returning back to FIG. 1, the multicoaxial connector 2 will be described. The multicoaxial connector 2 is, for example, a small-sized 192-core connector. However, the multicoaxial connector 2 may be a connector with 24 cores or more, and is not limited to the 192-core connector. Additionally, the multicoaxial connectors 2 with a different number of cores may be used in combination. The optical fiber cable 10 includes, for example, four 192-core connectors and one 96-core connector. The multicoaxial connector 2 is accommodated in the protective tube 21. Note that in FIG. 1, for convenience of illustration, only three multicoaxial connectors 2 are shown. The multicoaxial connector 2 is connected to an end portion of the optical fiber ribbon 411 (see FIG. 3). However, the multicoaxial connector 2 may be connected to end portions of the optical fibers 411A to 411L (see FIG. 3).

The pitch converter 3 is provided between an end portion of the optical fiber ribbon 411 and an end portion of the multicoaxial connector 2. The pitch converter 3 is configured to convert a pitch of the optical fibers 411A to 411L. In the present embodiment, the pitch of the optical fibers 411A to 411L in the optical fiber ribbon 411 is 200 µm, and an arrangement pitch in the multicoaxial connector 2 is 250 µm. The pitch converter 3 converts the pitch of the optical fibers 411A to 411L from 200 µm to 250 µm by separating the plurality of optical fibers 411A to 411L into single fibers and increasing the pitch. Accordingly, the plurality of optical fibers 411A to 411L are connected to the multicoaxial connector 2 at the pitch of 250 µm. Note that the pitch converter 3 may not be required if there is no need to convert the pitch.

The protective tube 21 has a substantially cylindrical shape. A front end portion of the protective tube 21 has a spherical shape. An outer diameter of the protective tube 21 is, for example, 25 mm or less. The protective tube 21 is provided at a front end portion of the optical fiber cable 100 with a towing tool. A surface of the protective tube 21 is coated with, for example, polyvinyl chloride or the like. An outer diameter of the protective tube 21 is larger than an outer diameter of the cable body 1 and an outer diameter of the pulling eye 22.

A rear end portion of the pulling eye 22 is connected to the front end portion of the protective tube 21. The pulling eye 22 is formed of a material having sufficient strength to pull the optical fiber cable 10. Such a material is, for example, metal such as iron. The pulling eye 22 has a void portion 221. A cable laying worker (operator) can pull the optical fiber cable 10 by, for example, connecting a wire or the like to the void portion 221 and pulling the wire by means of a winch.

### (Measurement of Kinetic Friction Coefficient of Cable Sheath)

The inventor conducted an experiment using a measurement device 200 illustrated in FIG. 4 in order to measure the kinetic friction coefficient of the cable sheath 6. As illustrated in FIG. 4, the measurement device 200 includes a first metal plate 201, a second metal plate 202, and four cylindrical members 203. Note that the four cylindrical members 203 are inserted into hole portions provided at four corners of the first metal plate 201 and the second metal plate 202, respectively. In FIG. 4, only two cylindrical members 203 are shown for convenience of illustration. Additionally, the first metal plate 201 and the second metal plate 202 are flat plates made of stainless steel in order to simulate a wall surface of a duct used when the optical fiber cable is inserted.

The inventor has measured the kinetic friction coefficient of the cable sheath by a method of sandwiching the optical fiber cable between the first metal plate 201 and the second metal plate 202 disposed above the first metal plate 201 and pulling the optical fiber cable in the longitudinal direction of the metal plate (a right direction in FIG. 4) from a state in which a load is applied to the second metal plate 202. Note that, in the above experiment, the load of about 2.0 kg was applied to the second metal plate 202. The length of the optical fiber cable is about 300 mm. The length of the first metal plate 201 and the second metal plate 202 in the longitudinal direction is about 150 mm. A tensile speed of the optical fiber cable is about 500 mm/min. Note that, in the present embodiment, the kinetic friction coefficient was evaluated using an average value of pulling tensions. In addition, the optical fiber cable used in the above experiment is the 864-core optical fiber cable illustrated in FIG. 1.

### (Pressure-Feeding Evaluation of Optical Fiber Cable)

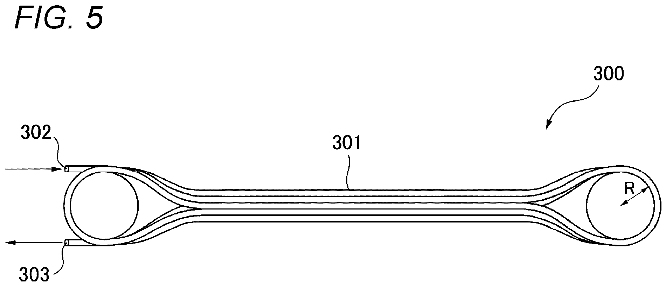

In order to perform a pressure-feeding evaluation of the optical fiber cable 10, the inventor performed a pressure-feeding test based on an IEC using a pressure-feeding device 300 illustrated in FIG. 5. A length of a pipe 301 is 1000 m, and is folded back at intervals of 100 m. A radius of curvature R of the pipe 301 is 40 times an inner diameter of the pipe, and an inner diameter of the pipe 301 is 30 mm. An outer diameter of the optical fiber cable 10 is 20 mm. An opening 302 is an inlet of the air and the optical fiber cable, and an opening 303 is an outlet of the air and the optical fiber cable. Note that an air pressure was set to 1.3 MPa or higher and 1.5 MPa or less.

In the pressure-feeding test, those having a pressure-feeding distance of 2000 m or longer were evaluated as very good, those having a pressure-feeding distance of 1000 m or longer and less than 2000 m were evaluated as good, and those having a pressure-feeding distance of less than 1000 m were evaluated as poor. Note that the longer the pressure-feeding distance, the better the insertion characteristics of the optical fiber cable. That is, as the pressure-feeding distance is longer, the optical fiber cable has good low frictional properties.

### (Evaluation of Flame Retardance of Optical Fiber Cable)

In order to evaluate the flame retardance of the optical fiber cable 10, the inventor performed a combustion test by the plenum test UL910 (NFPA262) and a combustion test based on the European construction products regulation (CPR).

In the combustion test performed by the plenum test UL910, the flame retardance is evaluated by performing a combustion test among flame retardance standards that are determined by Underwriters Laboratory (UL). Although the combustion test may be different depending on a shape of a sample, grades such as CMX (combustion test, normally referred to as VW-1 test), CM (vertical tray combustion test), CMR (riser test), CMP (plenum test), and the like are set in descending order of combustion performance. The plenum test employed in the present embodiment is a test in which an optical fiber cable is laid in a plenum space that is a space in which air is always flowing by air conditioning. The plenum space is, for example, in a ceiling or the like. In the plenum test according to the present embodiment, the flame retardance of the optical fiber cable was evaluated by igniting the optical fiber cable disposed in the plenum space and evaluating a fire spreading property and a fuming property of the optical fiber cable.

In the present embodiment, the optical fiber cable satisfying the predetermined standard in the combustion test by the plenum test UL910 was evaluated as good, and the optical fiber cable failing to satisfy the predetermined standard was evaluated as poor.

In addition, in the combustion test based on European construction products regulation, the flame retardance of the optical fiber cables was evaluated by combusting the optical fiber cables laid in multiple rows for 20 minutes by means of a burner with a burner output of 20 kW, and measuring a damaged length, a fuming amount, a total amount of heat generation, and a rate of heat generation. Specifically, resistance to burning was evaluated based on a measurement result of the damaged length, a low fuming property was evaluated based on a measurement result of the fuming amount, and a heat generation property was evaluated based on measurement results of the total amount of heat generation and the rate of heat generation. Note that the rate of heat generation is the energy generated when an object burns, and the total amount of heat generation is a cumulative value of rates of heat generation during a time from the start of combustion to the end of combustion. Additionally, the length of the optical fiber cable was set to 3.5 m. The above combustion test is performed in accordance with the international flame retardance standard EN50399.

In the present embodiment, the optical fiber cable conforming to class B or higher in the CPR standard was evaluated as very good, the optical fiber cable conforming to class C in the CPR standard was evaluated as good, and the optical fiber cable not conforming to class C or higher in the CPR standard was evaluated as poor.

Table 1 shows the results of each experiment regarding the optical fiber cables in Experimental Examples 1 to 4.

**[Table 1]**

| Experimental Example | Cable Structure | Oxygen Index of Cable Sheath and Covering Material | Kinetic Friction Coefficient | Pressure-Feeding Test Result (m) | Pressure-Feeding Evaluation | Result of Plenum Test | Result of Combustion Tests based on CPR |
|---|---|---|---|---|---|---|---|
| Experimental Example 1 | 864-core type | Covering Material: 45, Cable Sheath: 42 | 0.7 | 600 m | poor | good | very good (Class B) |
| Experimental Example 2 | 864-core type | Covering Material: 38, Cable Sheath: 40 | 0.45 | 1100 m | good | poor | good (Class C) |
| Experimental Example 3 | 864-core type | Covering Material: 45, Cable Sheath: 40 | 0.5 | 1000 m | good | good | very good (Class B) |
| Experimental Example 4 | 864-core type | Covering Material: 40, Cable Sheath: 38 | 0.3 | 2000 m | very good | good | good (Class C) |

Experimental Example 1 will be described. The oxygen index of the covering material provided in the optical fiber cable according to Experimental Example 1 is 45, and the oxygen index of the cable sheath is 42. As a result of the above experiment, the kinetic friction coefficient of the cable sheath provided in the optical fiber cable according to Experimental Example 1 was 0.7. Additionally, when the optical fiber cable according to Experimental Example 1 was pressure-fed in the pipe 301, the pressure-feeding distance was 600 m. Therefore, the pressure-feeding evaluation of the optical fiber cable according to Experimental Example 1 was poor.

Since the optical fiber cable according to Experimental Example 1 satisfied the predetermined standard in the combustion test according to the plenum test UL910, the optical fiber cable was evaluated as good in the combustion test according to the plenum test UL910. In addition, since the optical fiber cable according to Experimental Example 1 conformed to class B in the CPR standard, the optical fiber cable was evaluated as very good in the combustion test based on the European construction products regulation.

Experimental Example 2 will be described. The oxygen index of the covering material provided in the optical fiber cable according to Experimental Example 2 is 38, and the oxygen index of the cable sheath is 40. As a result of the above experiment, the kinetic friction coefficient of the cable sheath provided in the optical fiber cable according to Experimental Example 2 was 0.45. Additionally, when the optical fiber cable according to Experimental Example 2 was pressure-fed in the pipe 301, the pressure-feeding distance was 1100 m. Therefore, the pressure transport evaluation of the optical fiber cable in Experiment Example 2 was good.

Since the optical fiber cable according to Experimental Example 2 did not satisfy the predetermined standard in the combustion test according to the plenum test UL910, the optical fiber cable was evaluated as poor in the combustion test according to the plenum test UL910. In addition, since the optical fiber cable according to Experimental Example 2 conformed to class C in the CPR standard, the optical fiber cable was evaluated as good in the combustion test based on the European construction product regulations.

Experimental Example 3 will be described. The oxygen index of the covering material provided in the optical fiber cable according to Experimental Example 3 is 45, and the oxygen index of the cable sheath is 40. As a result of the above experiment, the kinetic friction coefficient of the cable sheath provided in the optical fiber cable according to Experimental Example 3 was 0.5. Additionally, when the optical fiber cable according to Experimental Example 3 was pressure-fed in the pipe 301, the pressure-feeding distance was 1000 m. Therefore, the pressure transport evaluation of the optical fiber cable in Experiment Example 3 was good.

Since the optical fiber cable according to Experimental Example 3 satisfied the predetermined standard in the combustion test according to the plenum test UL910, the optical fiber cable was evaluated as good in the combustion test according to the plenum test UL910. In addition, since the optical fiber cable according to Experimental Example 3 conformed to class B in the CPR standard, the optical fiber cable was evaluated as very good in the combustion test based on the European construction products regulation.

Experimental Example 4 will be described. The oxygen index of the covering material provided in the optical fiber cable according to Experimental Example 4 is 40, and the oxygen index of the cable sheath is 38. As a result of the above experiment, the kinetic friction coefficient of the cable sheath provided in the optical fiber cable according to Experimental Example 4 was 0.3. Additionally, when the optical fiber cable according to Experimental Example 4 was pressure-fed in the pipe 301, the pressure-feeding distance was 2000 m. Therefore, the pressure-feeding evaluation of the optical fiber cable according to Experiment Example 4 was very good.

Since the optical fiber cable according to Experimental Example 4 satisfied the predetermined standard in the combustion test according to the plenum test UL910, the optical fiber cable was evaluated as good in the combustion test according to the plenum test UL910. In addition, since the optical fiber cable according to Experimental Example 4 conformed to class C in the CPR standard, the optical fiber cable was evaluated as good in the combustion test based on the European construction product regulations.

From the above results, it could be confirmed that the optical fiber cable 10 in which the kinetic friction coefficient of the cable sheath 6 with respect to the metal plate is 0.5 or less has good insertion characteristics.

In addition, from the above results, it could be confirmed that, in particular, the optical fiber cable 10 in which the kinetic friction coefficient of the cable sheath 6 is 0.3 or less has very good insertion characteristics.

In addition, from the results of the combustion test according to the plenum test UL910 and the combustion test based on the European construction products regulation, it could be confirmed that the optical fiber cable 10 in which the oxygen index of the covering material 412 is 40 or more has good flame retardance.

According to the optical fiber cable 10 described above, the kinetic friction coefficient between the cable sheath 6 and the metal plate is 0.5 or less, so the optical fiber cable 10 has good low frictional properties. Additionally, when the oxygen index of the covering material 412 is 40 or more, the optical fiber cable 10 has good flame retardance. In this way, the optical fiber cable 10 has good low frictional properties and flame retardance.

Additionally, according to the optical fiber cable 10, when the kinetic friction coefficient of the cable sheath 6 is 0.3 or less, the optical fiber cable 10 has better insertion characteristics.

In addition, according to the optical fiber cable 10, the plurality of tensile strength members 7 are embedded in the cable sheath 6 at uniform intervals. Therefore, in the optical fiber cable 10, bending anisotropy is unlikely to occur.

In addition, according to the optical fiber cable 10, the cable sheath 6 contains the halogen-free resin, so it can contribute to reducing the environmental load.

In addition, according to the optical fiber cable 10, since the outer layer 52 of the press-wrapping tape 5 is flame retardant, the flame retardance of the optical fiber cable 10 can be further improved.

Additionally, according to the optical fiber cable 10, the covering material 412 included in each subunit 41 has flame retardance. That is, since each subunit 41 can be made to have flame retardance, even a single subunit can be flame retardant.

Additionally, according to the optical fiber cable 10, the 192-core multicoaxial connectors 2 and the 96-core multicoaxial connector 2 are connected to the end portions of the plurality of optical fiber ribbons 411. That is, the multicoaxial connectors of 24 or more cores are connected to the end portions of the plurality of optical fiber ribbons 411. For this reason, according to the optical fiber cable 10, a time required for connection to other optical fibers or the like can be shortened.

Although the present disclosure has been described in detail with reference to the specific embodiment, it is obvious to one skilled in the art that a variety of changes and modifications can be made without departing from the spirit and scope of the present disclosure. In addition, the numbers, positions, shapes, and the like of the constitutional members described above are not limited to those in the above embodiment, and can be changed to suitable numbers, positions, shapes, and the like when implementing the present disclosure.

In the above embodiment, the optical fiber cable 10 includes the multicoaxial connector 2 and the pitch converter 3, but may not include at least one of the multicoaxial connector 2 and the pitch converter 3.

In the above embodiment, the number of multicoaxial connectors 2 and the number of cores of the multicoaxial connector 2 provided in the optical fiber cable 10 are not limited to the numbers illustrated in the above embodiment. For example, the optical fiber cable 10 may include nine 96-core connectors.

In the above embodiment, the plurality of optical fibers collected as the optical fiber ribbons 411 are accommodated in the cable core 4. However, the plurality of optical fibers may each be a single core optical fiber.

In the above embodiment, the optical fiber cable 10 includes the press-wrapping tape 5, but may not include the press-wrapping tape 5.

### REFERENCE SIGNS LIST

1: cable body
2: multicoaxial connector
3: pitch converter
4: cable core
5: press-wrapping tape
6: cable sheath
7: tensile strength member
8: tearing string
10: optical fiber cable
20: towing tool
21: protective tube
22: pulling eye
41: subunit
42: water absorbent
51: inner layer
52: outer layer
100: fiber optical cable with towing tool
200: measurement device
201: first metal plate
202: second metal plate
203: cylindrical member
221: void portion
300: pressure-feeding device
301: pipe
302, 303: opening
411: optical fiber ribbon
411A to 411L: optical fiber
412: covering material
413: coupling portion
414: non-coupling portion
415: coupling resin
R: bending in pipe

## Claims

1. An optical fiber cable comprising:
a cable core comprising a plurality of optical fibers or a plurality of optical fiber ribbons;
a cable sheath disposed outside the cable core;
a plurality of subunits, each of the plurality of subunits being disposed in the cable core and comprising a covering material covering the plurality of optical fibers or the plurality of optical fiber ribbons; and
at least one tensile strength member embedded in the cable sheath,
wherein the cable sheath has a kinetic friction coefficient of 0.5 or less with respect to a metal plate, and
wherein the covering material has an oxygen index of 40 or more.

2. The optical fiber cable according to claim 1,
wherein the kinetic friction coefficient of the cable sheath is 0.3 or less, and
wherein the oxygen index of the coating material is 40 or more.

3. The optical fiber cable according to claim 1 or 2, wherein a plurality of the tensile strength members are embedded at equal intervals in a layer of the cable sheath.

4. The optical fiber cable according to any one of claims 1 to 3, wherein the cable sheath comprises a halogen-free resin.

5. The optical fiber cable according to any one of claims 1 to 4, further comprising:
a press-wrapping tape wound around an outer periphery of the cable core,
wherein at least a part of the press-wrapping tape is flame retardant.

6. The optical fiber cable according to any one of claims 1 to 5, wherein a multicoaxial connector of 24 cores or more is connected to end portions of the plurality of optical fibers or end portions of the plurality of optical fiber ribbons.
